# FASCICULE DE BREVET EUROPEEN

(11) **EP 0 468 848 B1**
(45) Date de publication et mention de la délivrance du brevet: **06.08.1997**
(21) Numéro de dépôt: 91401955.9
(22) Date de dépôt: 12.07.1991
(51) Int. Cl.: G06K 19/073, G06K 7/06

(54) **Connecteur électrique pour carte contenant un circuit électronique et dispositif et procédé de détection de fraude en faisant application**
Elektrischer Verbinder für Chipkarten und Vorrichtung und Anwendung zur Betrugsdetektion unter Anwendung dieses Verbinders
Electrical connector for chip card and device and method for fraud detection making use of it

(30) Priorité: 12.07.1990 FR 9008888
(43) Date de publication de la demande: 29.01.1992
(73) Titulaire: Landis & Gyr Communications S.A., Ch-12111 Geneve 16 (CH)
(72) Inventeur: Sellier, Michel, F-03100 Montluçon (FR)
(74) Mandataire: Fort, Jacques

(56) Documents cités:
- FR-A- 2 554 262
- FR-A- 2 638 552
- FR-A- 2 646 260
- FR-A- 2 646 261

## Description

L'invention concerne les connecteurs électriques destinés à recevoir une carte, dite à mémoire, de forme plate, du type contenant un circuit électronique constituant un support d'information, cette carte portant, sur une de ses grandes faces au moins, des contacts ohmiques qui, lors de l'utilisation de la carte, sont en liaison électrique avec des contacts complémentaires équipant le connecteur, destinés à relier le circuit à une interface de liaison avec un ensemble électronique de gestion.

L'emplacement des contacts ohmiques sur les cartes destinées à être utilisées dans un pays donné est fixé par une norme, afin d'autoriser l'utilisation de cartes émises par des organismes différents sur n'importe lequel des lecteurs mis à la disposition du public. Ces contacts sont en général proches de l'arête avant de la carte, dans le sens de l'introduction de cette dernière. Le circuit électronique, souvent constitué par un micro-processeur et/ou une mémoire, est lui-même proche des contacts.

Les connecteurs appartiennent soit au type dit "fermé", qui avale complètement la carte avant la transaction et ne la restitue qu'à l'issue de la transaction, soit au type dit "ouvert" où la partie arrière de la carte reste accessible à tous moments, de façon à permettre le retrait manuel de la carte. La plupart des nouvelles applications de la carte à mémoire prévoient l'utilisation de lecteurs ayant un connecteur ouvert, conformément à l'usage et aux recommandations internationales. Mais les connecteurs de ce genre existant actuellement ont un grave défaut. Ils rendent facile l'utilisation de fausses cartes, réalisées à partir d'une carte ayant des contacts ohmiques aux emplacements prévus sur une carte réelle et à l'arrière, c'est-à-dire dans la zone qui reste hors du connecteur pendant la transaction, des composants discrets reliés aux contacts ohmiques par des fils placés sur ou dans la carte.

On connaît déjà un connecteur électrique permettant de déceler l'utilisation de telles fausses cartes, conforme au préambule de la revendication 1.

Ce connecteur (FR-A-2 554 262) comporte des moyens disposés à proximité du passage de la carte, au moins partiellement entre les contacts électriques et la fente d'entrée de la carte, pour détecter la présence d'un fil conducteur. Ces moyens peuvent être un capteur capacitif ou un générateur de micro-ondes dans le volume de détection. Dans ce dernier cas, on détecte un signal hyperfréquence apparaissant sur les contacts.

L'invention vise à fournir un connecteur qui, lui, utilise le fait que les interfaces de liaison actuellement prévus émettent vers les contacts des signaux haute fréquence, préalablement à la transaction et au cours de la transaction.

Par exemple, lorsque la carte et l'interface ont les caractéristiques définies par le GIE "cartes à mémoire" en France, l'interface de liaison émet vers la carte des signaux à une fréquence déterminée f de niveau V relativement élevé (par exemple f - 3,57 MHz et V - 5 volts de crête à crête) au cours d'une phase préliminaire de reconnaissance du type de la carte introduite. Ces signaux sont transférés des contacts ohmiques au circuit électronique par des conducteurs. Ces conducteurs induisent, à leur voisinage, un champ électromagnétique détectable et mesurable, par exemple par un capteur accordé sur la fréquence f pour mieux discriminer les signaux du bruit de fond.

L'invention propose en conséquence un connecteur pour carte à mémoire suivant la partie caractérisante de la revendication 1.

Les moyens comportent avantageusement un capteur constitué par au moins un cadre plan accordé sur la fréquence des signaux émis par l'interface, placé dans le connecteur de façon à être à proximité de la carte de paiement et à recouvrir au moins toute la largeur de cette dernière, entre les contacts et la fente. Deux cadres peuvent être prévus, un de chaque côté du trajet de la carte, pour accroître la sensibilité ; chacun des cadres constitue un capteur inductif.

Lorsqu'une carte authentique est introduite dans le connecteur, le capteur ne fournit qu'une tension de sortie faible lors de l'envoi des signaux émis par l'interface électronique, étant donné qu'il est en un emplacement décalé par rapport aux conducteurs et au circuit électronique. Si la tension de sortie nominale du capteur est égale à V1, on recueille une tension V2 supérieure à V1 en cas d'utilisation d'une fausse carte, dont les fils de liaison passent sous le cadre.

Les moyens de détection peuvent être reliés à des moyens permettant d'indiquer une probabilité élevée d'emploi de fausses cartes lorsque la tension V2 fournie par les moyens détecteurs dépasse une valeur V1 + ΔV1, ΔV1 étant choisi pour tenir compte des dispersions.

Dans une variante de réalisation, permettant d'anticiper sur la création éventuelle de fausses cartes utilisant un mode de liaison créant un champ magnétique au droit du capteur qui est nettement plus faible que le champ provoqué par une carte authentique, ou utilisant un blindage mis à la masse au-dessus des conducteurs de liaison, on peut associer le capteur à des moyens indiquant une probabilité de tentative de fraude lorsque la tension fournie par le cadre est inférieure à V1 - ΔV3, ΔV3 étant choisi de façon à éviter les fausses alarmes.

L'invention propose également un dispositif de détection de fraude comprenant, en plus d'un connecteur tel que défini ci-dessus, une chaîne de détection et de mesure ayant un amplificateur recevant le signal de sortie du capteur, un détecteur et un comparateur avec une ou plusieurs tensions déterminées, fournissant, si le signal de sortie du capteur a une valeur indiquant une probabilité de fraude, un signal d'inhibition de la transaction ultérieure et/ou d'alarme ; elle propose également un procédé de détection conforme à la revendication 9.

La chaîne de détection et de mesure peut être prévue pour permettre un ajustement manuel de V1 + ΔV1 ou une auto-adaptation réalisée par plusieurs mesures successives de V1 provoquées par l'introduction successives de plusieurs cartes authentiques. La chaîne peut comporter une logique majoritaire, évitant qu'un parasite aléatoire n'interdise l'utilisation d'une carte qui est en fait authentique.

L'invention sera mieux comprise à la lecture de la description qui suit d'un mode particulier de réalisation, donné à titre d'exemple non limitatif. La description se réfère aux dessins qui l'accompagnent, dans lesquels :
- la figure 1 est un schéma de principe d'un lecteur de carte à connecteur classique "ouvert" ;
- la figure 2 est un schéma de principe d'un dispositif de détection de fraude suivant un mode particulier de réalisation de l'invention ;
- la figure 3 est un schéma montrant une constitution de capteur différente de celle de la figure 2.

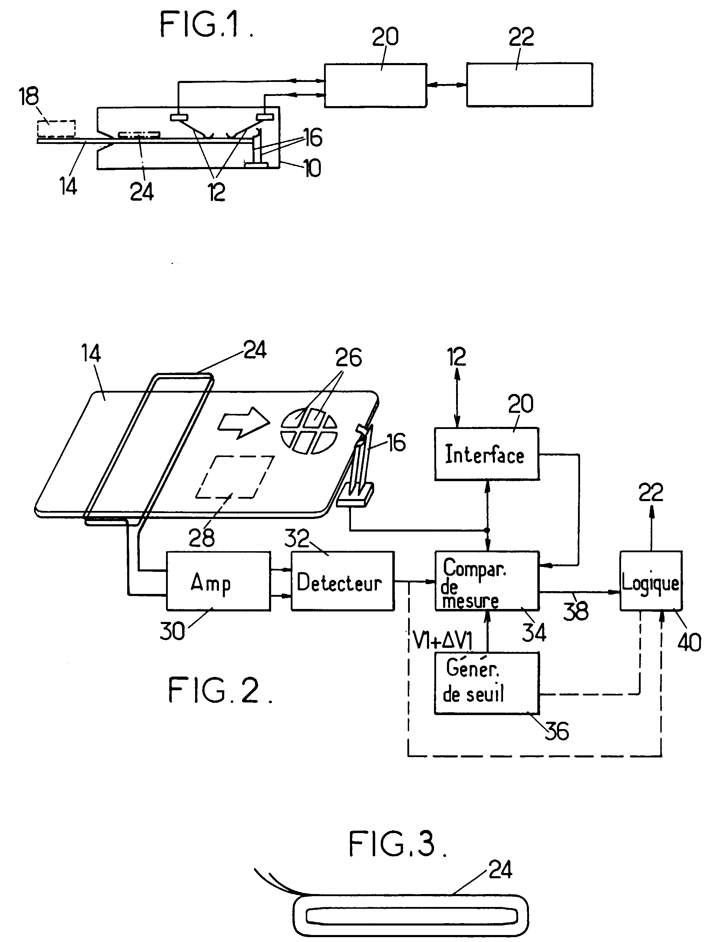

Le lecteur de carte dont la constitution de principe est montrée en figure 1 comporte un connecteur 10 ayant un boîtier muni d'une fente d'introduction d'une carte 14 et portant des contacts élastiques 12 destinés à assurer la liaison avec des contacts ohmiques prévus sur la carte. Le connecteur 10 peut avoir n'importe laquelle des constitutions couramment utilisées à l'heure actuelle. En général, il porte un interrupteur de fin de course 16, qui se ferme (ou s'ouvre) sous la poussée de la carte 14 lorsque cette dernière atteint sa position nominale de lecture.

Une carte authentique comporte un circuit électronique (composé en général d'un micro-processeur et/ou d'une mémoire) dans l'épaisseur même de la carte. Il est relativement facile de réaliser des fausses cartes en conservant la disposition des contacts ohmiques d'une carte authentique et en substituant, au circuit électronique incorporé d'une carte authentique, des composants discrets 18. Ces composants sont montés sur la partie arrière de la carte, qui reste à l'extérieur du connecteur lors des transactions. Les composants discrets 18 sont reliés aux contacts ohmiques par des fils ou des pistes conductrices.

Comme on l'a déjà indiqué plus haut, les contacts 12 sont reliés à une interface électronique 20, ou coupleur, elle-même reliée à des circuits de gestion 22 dont la nature peut être très variée. L'interface électronique 20 est notamment prévue pour envoyer à la carte 14 des signaux amorçant un processus de reconnaissance du type de la carte. Ces signaux sont à une haute fréquence f bien déterminée, 3,57 MHz en France en général, et ont un niveau logique relativement élevé, typiquement 5 Volts de crête à crête. Ces signaux sont émis à un instant déterminé, après fermeture (ou ouverture) de l'interrupteur de fin de course 16, par exemple par une antenne constituée de tiges directement soudées sur les contacts du lecteur. Ces signaux sont généralement émis sous forme de plusieurs trains successifs courts, par exemple à cadence de 10 par seconde.

Le connecteur suivant l'invention est muni d'un capteur 24 sensible au champ magnétique à haute fréquence dans une zone comprise entre la fente d'introduction de la carte dans le connecteur 10 et la zone occupée par les conducteurs de liaison entre les contacts ohmiques et le circuit électronique de la carte 14. Dans le mode de réalisation montré en figure 2, le capteur 24 est constitué par un cadre plan, accordé sur la fréquence f, placé parallèlement au trajet d'introduction de la carte 14 et ayant une dimension au moins égale à celle de la carte 14 transversalement au sens d'introduction de cette carte. La longueur du cadre dans la direction d'introduction est telle qu'il soit dans une zone où le champ électromagnétique créé par les conducteurs de liaison entre les contacts ohmiques 26 de la carte et le circuit électronique 28 d'une carte authentique est faible mais non nulle. Dans ces conditions, le signal de sortie du capteur 24, lors de la transmission des signaux à fréquence f depuis l'interface 20, a une valeur nominale.

Le capteur peut également être constitué par une bobine d'une quarantaine de spires, en fils de cuivre émaillé, destinée à être traversée par la carte et à se placer au niveau des fils de jonctions avec les composants discrets 18 d'une fausse carte. Une telle bobine n'étant pas exactement accordée à 3,57 MHz, elle peut être mise en parallèle avec un condensateur ajustable de réglage de l'accord.

La bobine peut également être constituée par un circuit imprimé multi-couches, simple face ou double face, d'une quarantaine de spires. L'accord est encore obtenu par un condensateur placé en parallèle.

Le dispositif de détection de fraude comporte une chaîne de détection et de mesure reliée au capteur 24. Cette chaîne peut être constituée d'un amplificateur 30, d'un détecteur 32 et d'un comparateur de mesure 34. L'amplificateur 30 et le détecteur 32 permettent de fournir une tension de sortie continue, proportionnelle à la valeur du champ appliqué au capteur 24. Le comparateur de mesure 34 est prévu pour fournir un signal binaire ayant une première valeur lorsque la tension qu'il reçoit est supérieure à un seuil V1 + ΔV fourni par un générateur 36, supérieure à la valeur nominale V1 obtenue avec une carte authentique.

Le seuil V1 + ΔV peut être ajusté manuellement, en mesurant tout d'abord la tension de sortie du détecteur 32 lorsqu'une carte authentique 14 est introduite dans le connecteur. Si la tension de sortie du détecteur 32 est alors V1, on donne au seuil V1 + ΔV une valeur telle que ce seuil ne soit pas dépassé pour d'autres cartes authentiques, en dépit des dispersions, et reste inférieur à la valeur V2 obtenue pour toutes les fausses cartes. Dans la pratique, on pourra adopter une valeur V1 + ΔV qui est la moyenne entre V1 et la valeur V2 obtenue avec des cartes falsifiées représentatives.

Le signal de sortie du comparateur 34 n'est significatif que pendant l'émission des signaux à haute fréquence par l'interface 20. Le comparateur peut comporter des entrées d'activation provenant de l'interrupteur de fin de course 16 et de l'interface 20. Pour éviter qu'un parasite ne provoque soit une indication de carte authentique alors qu'une carte fausse est introduite, soit l'inverse, il est avantageux de munir le comparateur de mesure de moyens provoquant plusieurs comparaisons successives, le résultat de chaque comparaison étant fourni sur une sortie 38 vers une logique majoritaire 40 qui valide l'électronique de gestion 22 uniquement si un pourcentage minimum déterminé des comparaisons donne un résultat positif (par exemple 3 sur 5 ou 4 sur 5).

La chaîne de détection et de mesure peut évoluer dans le temps, par suite du veillissement et/ou des variations de température. Il est souhaitable qu'elle comporte des moyens d'auto-adaptation. Ces moyens peuvent être incorporés à la logique 40, accumuler les résultats de mesure obtenus avec des cartes reconnues authentiques et faire évoluer en conséquence V1, ΔV restant constant.

Un auto-étalonnage peut également être effectué en provoquant, par exemple à intervalles réguliers, une mesure de la tension de sortie du détecteur 32 en l'absence de carte, en réponse à l'application du signal haute fréquence.

Enfin, le comparateur 34 peut être prévu pour comparer le signal de sortie du détecteur 32 non seulement à V1 + ΔV1, mais aussi à une autre valeur V1 - ΔV3 et à émettre un signal de probabilité de fausse carte lorsque la tension de sortie du détecteur 32 est inférieure à V1-ΔV3.

Un dispositif de détection de fraude comportant un tel comparateur double permet de déceler les fausses cartes recouvertes d'un blindage mis à la masse, qui ne rayonnent qu'un champ très faible.

A titre d'exemple, on peut indiquer qu'un dispositif de détection de fraude a été réalisé en utilisant une bobine en fils émaillés de 47 spires, accordée à l'aide d'un condensateur et fournissant un signal de sortie sensiblement sinusoïdal pouvant aller jusqu'à 800 millivolts en cas d'utilisation de fausse carte. L'amplificateur 30 avait un gain de 3. Le comparateur, destiné à déceler les différents types de fraude, comportait un seuil haut de 1,5 V et un seuil bas de 0,7 V. La comparaison était effectuée pour chacun des trains d'impulsion émis et chacun des comparateurs attaquait l'entrée d'un compteur. A l'issue de l'émission des trains d'impulsion, la décision était prise par un circuit à portes OU EXCLUSIF à partir de positions des compteurs de poids correspondant au nombre de trains émis et à la majorité jugée significative.

Le dispositif de détection était complété par une alimentation, non représentée sur les figures. Etant donné que le gain de l'amplificateur 30 dépendait de son niveau d'alimentation, cette dernière était régulée.

L'invention ne se limite pas aux modes particuliers de réalisation qui ont été représentés et décrits à titre d'exemple. Elle est susceptible de nombreuses variantes encore, portant aussi bien sur la constitution de la chaîne de détection et de mesure que sur celle du capteur 24. Ce dernier peut en particulier être constitué par une antenne, constituée par un fil ou plaque conductrice d'une longueur au moins égale à la largeur de la carte, placé à proximité de celle-ci comme le cadre des modes de réalisation précédents. L'antenne capte le rayonnement électromagnétique des signaux émis par l'interface à haute fréquence. Les signaux captés sont appliqués à un circuit accordé à la fréquence de l'interface, puis redressés et traités comme dans le dispositif décrit précédemment. Le circuit accordé peut notamment être constitué par un circuit LC dont soit la self inductance, soit la capacité est ajustable.

## Revendications

1. Connecteur électrique destiné à recevoir une carte de forme plate, contenant un circuit électronique (28) constituant un support d'information, ladite carte portant, sur une de ses grandes faces au moins, des contacts ohmiques destinés à entrer en liaison avec des contacts complémentaires (12) équipant le connecteur et reliant le circuit (28) à une interface (20) de liaison avec un ensemble électronique de gestion (22) commandé par l'actionnement d'un interrupteur de fin de course (16) prévu dans le connecteur, ledit interface étant prévu pour émettre des signaux haute fréquence vers les contacts, le dit connecteur comprenant des moyens accordés (24) de détection de champ électromagnétique, placés dans une zone comprise entre une fente d'entrée de la carte dans le connecteur (10) et l'emplacement occupé par le circuit électronique de la carte (14) dans le connecteur lorsque la carte occupe la position pour laquelle ses contacts ohmiques (26) sont en liaison avec les contacts du connecteur, le dit connecteur électrique étant caractérisé en ce que les dits moyens de détection sont accordés à ladite haute fréquence.

2. Connecteur selon la revendication 1, caractérisé en ce que les moyens accordés comprennent au moins un cadre plan (24) accordé à la fréquence des signaux de l'interface, placé parallèlement au trajet d'introduction de la carte, à proximité de la carte de paiement et recouvrant toute la largeur de cette dernière lorsqu'elle est en position de lecture.

3. Dispositif de détection de fraude comprenant un connecteur selon la revendication 1 ou 2, caractérisé en ce qu'il comprend également une chaîne de détection et de mesure ayant un amplificateur (30), un détecteur (32) et un comparateur (34) fournissant, si le signal de sortie du détecteur a une valeur indiquant une probabilité de fraude, un signal d'inhibition de la transaction.

4. Dispositif selon la revendication 3, caractérisé en ce que le comparateur est muni de moyens fournissant une tension de référence (V1 + ΔV1) supérieure à la tension de signal de sortie (V1) du détecteur fournie par une carte authentique et est prévu pour fournir un signal de probabilité de fraude lorsque la tension de sortie du détecteur dépasse (V1 + ΔV1).

5. Dispositif selon la revendication 4, caractérisé en ce que le comparateur est prévu pour fournir un signal indiquant une probabilité de tentative de fraude lorsque la tension fournie par le cadre est inférieure à (V1 - AV3), (ΔV3) étant une valeur prédéterminée.

6. Dispositif selon la revendication 4 ou 5, caractérisé en ce que ladite chaîne comporte des moyens d'auto-adaptation de (V1 + ΔV1) par plusieurs mesures successives de V1 provoquées par l'introduction successives de plusieurs cartes authentiques.

7. Dispositif selon la revendication 4, 5 ou 6, caractérisé en ce que la chaîne comporte une logique majoritaire, évitant qu'un parasite aléatoire n'interdise l'utilisation d'une carte qui est en fait authentique.

8. Connecteur électrique selon la revendication 1, caractérisé en ce que les moyens accordés comportent une antenne attaquant un circuit LC.

9. Procédé pour déceler l'insertion d'une fausse carte dans un connecteur destiné à recevoir une carte de forme plate, qui contient, lorsqu'elle est authentique, un circuit électronique (28) constituant un support d'information et qui porte, sur une grande face, des contacts ohmiques destinés à entrer en liaison avec des contacts supplémentaires (12) équipant le connecteur et reliant le circuit à une interface de liaison avec un ensemble électronique de gestion, suivant lequel:
on détecte l'insertion complète de la carte (14) dans le connecteur (10),
en réponse à ladite insertion complète, on émet, de l'interface de liaison (20) vers les contacts ohmiques (26) de la carte, des signaux à une haute fréquence déterminée,
on mesure le champ électromagnétique, dans une zone comprise entre une fente d'entrée de la carte dans le connecteur et l'emplacement occupé par le circuit électronique (28) de la carte (14) lorsque la carte est entièrement insérée,
on compare un signal électrique représentatif de la mesure à une ou plusieurs tensions déterminées,
et si les valeurs relatives du signal et des tensions déterminées indiquent une probabilité de fraude, on inhibe la transaction ultérieure, les dites tensions déterminées correspondant l'une à la présence de conducteurs discrets allant des contacts ohmiques vers la partie de la carte située hors du connecteur, l'autre à la présence d'un blindage sur la carte,
caractérisé en ce que la mesure est effectuée de façon sélective à l'aide de moyens (24) de détection de champ électromagnétique accordés à la dite haute fréquence.

## Patentansprüche

1. Elektrischer Verbinder, der zur Aufnahme einer platinenförmigen Karte mit einer einen Informationsträger bildenden elektronischen Schaltung (28) bestimmt ist, wobei diese Karte auf mindestens einer ihrer Flachseiten ohmsche Kontakte trägt, welche dazu bestimmt sind, in Verbindung mit an dem Verbinder vorgesehenen Gegenkontakten (12) zu treten, die die Schaltung (28) mit einer Schnittstelle (20) zur Verbindung mit einer durch Betätigung eines in dem Verbinder vorgesehenen Endstellungsunterbrechers (16) gesteuerten elektronischen Steuereinheit (22) verbinden, wobei diese Schnittstelle dazu vorgesehen ist, Signale hoher Frequenz zu den Kontakten hin zu senden, wobei der Verbinder abgestimmte Erfassungsmittel (24) zur Erfassung eines elektromagnetischen Felds umfaßt, welche in einem Bereich angeordnet sind, der zwischen einem Schlitz zum Einführen der Karte in den Verbinder (10) und derjenigen Stelle liegt, die von der elektronischen Schaltung der Karte (14) in dem Verbinder eingenommen wird, wenn die Karte die Position einnimmt, in der ihre ohmschen Kontakte (26) mit den Kontakten des Verbinders in Verbindung sind, wobei der elektrische Verbinder dadurch gekennzeichnet ist, daß die Erfassungsmittel auf die hohe Frequenz abgestimmt sind.

2. Verbinder nach Anspruch 1,
dadurch gekennzeichnet, daß die abgestimmten Mittel wenigstens eine auf die Frequenz der Signale der Schnittstelle abgestimmte Flachspule (24) umfassen, welche parallel zum Einführweg der Karte in der Nähe der Zahlungskarte angeordnet ist und, wenn diese sich in Leseposition befindet, deren gesamte Breite überdeckt.

3. Einrichtung zur Betrugserkennung, umfassend einen Verbinder nach Anspruch 1 oder 2,
dadurch gekennzeichnet, daß sie ferner eine Erfassungsund Meßkette mit einem Verstärker (30), einem Detektor (32) sowie einem Vergleicher (34) umfaßt, welcher ein Signal zur Unterbindung der Transaktion liefert, wenn das Ausgangssignal des Detektors einen Wert besitzt, der eine Betrugswahrscheinlichkeit angibt.

4. Einrichtung nach Anspruch 3,
dadurch gekennzeichnet, daß der Vergleicher mit Mitteln versehen ist, die eine Referenzspannung (V1 + ΔV1) bereitstellen, welche größer als die Spannung (V1) des bei einer echten Karte gelieferten Ausgangssignals des Detektors ist, und daß er dazu vorgesehen ist, ein Betrugswahrscheinlichkeitssignal zu liefern, wenn die Ausgangsspannung des Detektors (V1 + ΔV1) übersteigt.

5. Einrichtung nach Anspruch 4,
dadurch gekennzeichnet, daß der Vergleicher dazu ausgebildet ist, ein Signal zu liefern, das eine Wahrscheinlichkeit für einen Betrugsversuch angibt, wenn die von der Spule gelieferte Spannung kleiner als (V1 - ΔV3) ist, wobei (ΔV3) ein vorbestimmter Wert ist.

6. Einrichtung nach Anspruch 4 oder 5,
dadurch gekennzeichnet, daß die Kette Mittel zur Selbsteinstellung von (V1 + ΔV1) durch mehrere aufeinanderfolgende Messungen von V1 umfaßt, welche durch die aufeinanderfolgende Einführung mehrerer echter Karten bewirkt werden.

7. Einrichtung nach Anspruch 4, 5 oder 6,
dadurch gekennzeichnet, daß die Kette eine Majoritätslogik umfaßt, welche es verhindert, daß eine zufällige Störung den Gebrauch einer in Wirklichkeit echten Karte verbietet.

8. Elektrischer Verbinder nach Anspruch 1,
dadurch gekennzeichnet, daß die abgestimmten Mittel eine einen LC-Kreis treibende Antenne umfassen.

9. Verfahren zum Nachweis der Einführung einer gefälschten Karte in einen Verbinder, der zur Aufnahme einer platinenförmigen Karte bestimmt ist, welche im Fall ihrer Echtheit eine einen Informationsträger bildende elektronische Schaltung (28) aufweist und auf einer Flachseite ohmsche Kontakte trägt, die dazu bestimmt sind, in Verbindung mit an dem Verbinder vorgesehenen Gegenkontakten (12) zu treten, welche die Schaltung mit einer Schnittstelle zur Verbindung mit einer elektronischen Steuereinheit verbinden, bei welchem Verfahren das vollständige Einführen der Karte (14) in den Verbinder (10) erfaßt wird, in Antwort auf dieses vollständige Einführen Signale mit einer vorbestimmten hohen Frequenz von der Verbindungsschnittstelle (20) zu den ohmschen Kontakten (26) der Karte hin gesendet werden, das elektromagnetische Feld in einem Bereich gemessen wird, der zwischen einem Schlitz zum Einführen der Karte in den Verbinder und derjenigen Stelle liegt, die von der elektronischen Schaltung (28) der Karte (14) eingenommen wird, wenn die Karte vollständig eingeführt ist, ein für die Messung repräsentatives elektrisches Signal mit einer oder mehreren vorbestimmten Spannungen verglichen wird und die weitere Transaktion unterbunden wird, wenn die Vergleichswerte des Signals und der vorbestimmten Spannungen eine Wahrscheinlichkeit für einen Betrug angeben, wobei die vorbestimmten Spannungen zum einen dem Vorhandensein von diskreten Leitern entsprechen, welche von den ohmschen Kontakten zu dem außerhalb des Verbinders befindlichen Teil der Karte verlaufen, zum anderen dem Vorhandensein einer Abschirmung auf der Karte entsprechen,
dadurch gekennzeichnet, daß die Messung in selektiver Weise mit Hilfe von auf die hohe Frequenz abgestimmten Erfassungsmitteln (24) zur Erfassung eines elektromagnetischen Felds durchgeführt wird.

## Claims

1. An electrical connector intended to receive a flat card, containing an electronic circuit (28) constituting a data support, said card carrying, on one of its large surfaces at least, ohmic contacts intended to connect with complementary contacts (12) provided on the connector and connecting the circuit (28) to an interface (20) connecting with an electronic management unit (22) controlled by actuation of a limit switch (16) provided in the connector, said interface being adapted to emit high-frequency signals to the contacts, the said connector comprising tuned electromagnetic field detection means (24) disposed in a zone situated between a slot for entry of the card into the connector (10) and the position occupied by the card electronic circuit (14) in the connector when the card occupies the position in which its ohmic contacts (26) are connected to the connector contacts, the said electrical connector being characterised in that the said detection means are tuned to the said high frequency.

2. A connector according to claim 1, characterised in that the tuned means comprise at least one flat frame (24) tuned to the frequency of the interface signals, disposed parallel to the card introduction path, near the payment card and covering the entire width of the latter when it is in the reading position.

3. A fraud detection device comprising a connector according to claim 1 or 2, characterised in that it also comprises a detection and measuring chain having an amplifier (30), a detector (32) and a comparator (34) which, if the detector output signal has a value indicating a fraud probability, delivers a transaction inhibition signal.

4. A device according to claim 3, characterised in that the comparator is provided with means delivering a reference voltage (V1 + ΔV1) greater than the output signal voltage (V1) of the detector delivered by a genuine card and is adapted to deliver a fraud probability signal when the detector output voltage exceeds (V1 + ΔV1).

5. A device according to claim 4, characterised in that the comparator is adapted to deliver a signal indicating a fraud attempt probability when the voltage delivered by the frame is less than (V1 - ΔV3), (ΔV3) being a predetermined value.

6. A device according to claim 4 or 5, characterised in that the said chain comprises means for the self-adjustment of (V1 + ΔV1) by a plurality of successive measurements of (V1) produced by successive introduction of a plurality of genuine cards.

7. A device according to claim 4, 5 or 6, characterised in that the chain comprises a majority logic which prevents a random interference from preventing the use of a card which is in fact genuine.

8. An electrical connector according to claim 1, characterised in that the tuned means comprise an antenna driving an LC circuit.

9. A method of detecting the insertion of a counterfeit card in a connector adapted to receive a flat card which, when genuine, contains an electronic circuit (28) constituting a data support and which carries, on one large surface, ohmic contacts intended to connect with supplementary contacts (12) with which the connector is provided and connecting the circuit to an interface connecting with an electronic management unit, wherein:
the complete insertion of the card (14) in the connector (10) is detected,
in response to said complete insertion, signals at a determined high frequency are emitted from the connecting interface (20) to the ohmic contacts (26) of the card,
the electromagnetic field is measured in a zone between a slot for the entry of the card into the connector and the position occupied by the electronic circuit (28) of the card (14) when the card is fully inserted,
an electrical signal representing the measurement is compared at one or a plurality of determined voltages,
and if the relative values of the signal and of the determined voltages indicate a fraud probability the subsequent transaction is inhibited, the said determined voltages corresponding respectively to the presence of discrete conductors from the ohmic contacts to the part of the card situated outside the connector, and to the presence of a shielding on the card,
characterised in that the measurement is effected selectively with the aid of electromagnetic field detection means (24) tuned to the said high frequency.
